# EUROPEAN PATENT SPECIFICATION

(11) **EP 2 903 217 B1**
(45) Date of publication and mention of the grant of the patent: **09.09.2020**
(21) Application number: 14153345.5
(22) Date of filing: 30.01.2014
(51) Int. Cl.: H04L 12/28, H04L 29/08, G05B 19/042

(54) **BUILDING AUTOMATION METHOD AND SYSTEM**
GEBÄUDEAUTOMATISIERUNGS-SYSTEM UND -VERFAHREN
SYSTÈME ET METHODE D'AUTOMATISATION DE BÂTIMENTS

(43) Date of publication of application: 05.08.2015
(73) Proprietor: Siemens Schweiz AG, 8047 Zürich (CH)
(72) Inventor: Copley, Jonathan Miles, 6300 Zug (CH); Eger, Kolja, 85521 Ottobrunn (DE); Hammer, Jörg, 6331 Hünenberg (CH); Kulkarni, Vivek, 82008 Unterhaching (DE)
(74) Representative: Maier, Daniel Oliver

(56) References cited:
- US-A1- 2012 066 168
- US-A1- 2012 232 701
- TINA YU: "Modeling Occupancy Behavior for Energy Efficiency and Occupants Comfort Management in Intelligent Buildings", MACHINE LEARNING AND APPLICATIONS (ICMLA), 2010 NINTH INTERNATIONAL CONFERENCE ON, IEEE, 12 December 2010 (2010-12-12), pages 726-731, XP031900850, DOI: 10.1109/ICMLA.2010.111 ISBN: 978-1-4244-9211-4

## Description

### Background

The present disclosure relates to an improved building automation system. The present disclosure focuses on a building automation system that relies on a plurality of readings from electricity and water consumption meters as well as from temperature, humidity, and/or other sensors.

Data from meters, from sensors, and from other devices in buildings are increasingly made available to cloud server applications via home or smart meter gateways. Access to these data yields new value adding applications as well as business models. They frequently harness the recognition of occupancy and behavioral patterns in residential, commercial or industrial buildings.

Recognition of occupancy and behavioral patterns can be utilized for optimization purposes. Optimization in this case applies to building and home automation including HVAC (heating, ventilation, and air conditioning), lighting, safety & security, as well as assisted living.

Deviations from normal behavioral patterns could, for instance, be: the opening of a door or of a window at an unexpected time of the day, an unexpected temperature rise or fall or noise due to footsteps, the improbable presence of a mobile device as detected by a router, or any other unforeseen sensor readings. A detection of one or of a series of unexpected events may be used to alert occupants (e.g. via text message, via email, or via social media). It may also result in follow-up action such as inspection of the interior or entrance door through a web camera. Similarly, behavioral deviations may be used in the context of assisted living for alerting relatives or carers when an occupant appears ill or immobile.

Other deviations from expected behavior such as no sign of life at the times usually expected may indicate that occupants are absent. The heating, ventilation, and air conditioning (HVAC) system may then automatically switch to energy saving mode. Typically, the temperature inside a building may be lowered by several degrees Celsius during absences.

To minimize the cost of detecting occupancy and behavioral patterns, it is desirable to rely primarily on meters, sensors, and communication gateways/routers that are installed as part of standard infrastructure. These meters comprise electricity, water, and other meters applicable to consumption. Sensors that are part of standard infrastructure may comprise temperature, humidity, carbon dioxide, volatile organic compounds and other sensors as used in ventilation control systems. Communication gateways typically include internet and home entertainment data gathered for instance from personal computers, from laptops, from smart phones, or from smart television apparatuses.

Via the fusion of meters, of sensors, and of communication gateway data it is possible to gather other useful pieces of information such as
- the number of people living in a building,
- the lifestyle of those individuals and even what phase of life they are in.

Information about how many and what people occupy a building and about how they behave may in the future be used for purposes such as targeted advertising.

Various approaches to building automation have been on the market for years. These include NEST® (http://www.nest.com). NEST® is a learning thermostat that can be controlled through a phone application. NEST comes with an auto-away feature. That is, NEST uses sensors to detect an individual's presence or absence and accordingly triggers an auto-away program. Meterplug (http://meterplug.com) offers an intermediate plug with proximity control. As someone walks away with his or her phone, the intermediate plug switches off any appliance connected to it. Meterplug relies on Bluetooth as a wireless link between the phone and the intermediate plug.

Tado® (http://www.tado.com/de/) determines the position of a phone to control the heating of a building. To save battery life of a phone, the corresponding application relies on the position of the closest radio cell rather than on data from a satellite-based positioning system.

The US patent application US2012/0232701A1 was published on 13 September 2012. The US patent application US2012/0232701A1 teaches systems and methods for optimizing energy and resource management for building systems.

The aim of the present disclosure is at least to mitigate the aforementioned difficulties and to provide advanced building automation systems that meet the aforementioned requirements.

### Summary

The present disclosure is based on the discovery that a building automation system may effectively rely on patterns related to the consumption of electricity and other resources of standard infrastructure to determine lifestyle behavior. Resources of standard infrastructure include, but are not limited to, any resources not directly linked to building automation. Resources not directly linked to building automation comprise internet gateways, internet routers, internet switches, home entertainment equipment, personal computers, laptops, smart phones, or smart television apparatuses. In addition, averaging of time histories of consumption patterns improves on the reliability of available input data.

The above problems are resolved by a building automation system according to claim 10 and a method for automating a building according to claim 1. Preferred embodiments of the present disclosure are covered by the dependent claims.

It is a related object of the present disclosure to provide a building automation system that allows for averaging of consumption patterns over a time span of several days or weeks.

It is another object of the present disclosure to provide a building automation system that further detects automated events such as watering plants.

It is a related object of the present disclosure to provide a building automation system that has the capacity to filter out automated events such as watering plants.

It is yet another object of the present disclosure to provide a building automation system that is configured to differentiate between absence and presence of people including their activities such as sleep and awake when present.

It is yet another object of the present disclosure to provide a building automation system that recognizes and harnesses temperature, and/or humidity transients, and/or carbon dioxide, and/or volatile organic compounds, and/or noise, and/or other sensor data.

It is yet another object of the present disclosure to provide a building automation system that is configured to differentiate between day and night.

It is yet another object of the present disclosure to provide a building with a building automation system that resolves at least one of the above objects.

### Brief description of the drawings

Various features will become apparent to those skilled in the art from the following detailed description of the disclosed non-limiting embodiments. The drawings that accompany the detailed description can be briefly described as follows:
FIG 1 is a block diagram providing a general overview of the components of the building automation system.
FIG 2 gives an example of an occupancy pattern.

### Detailed description

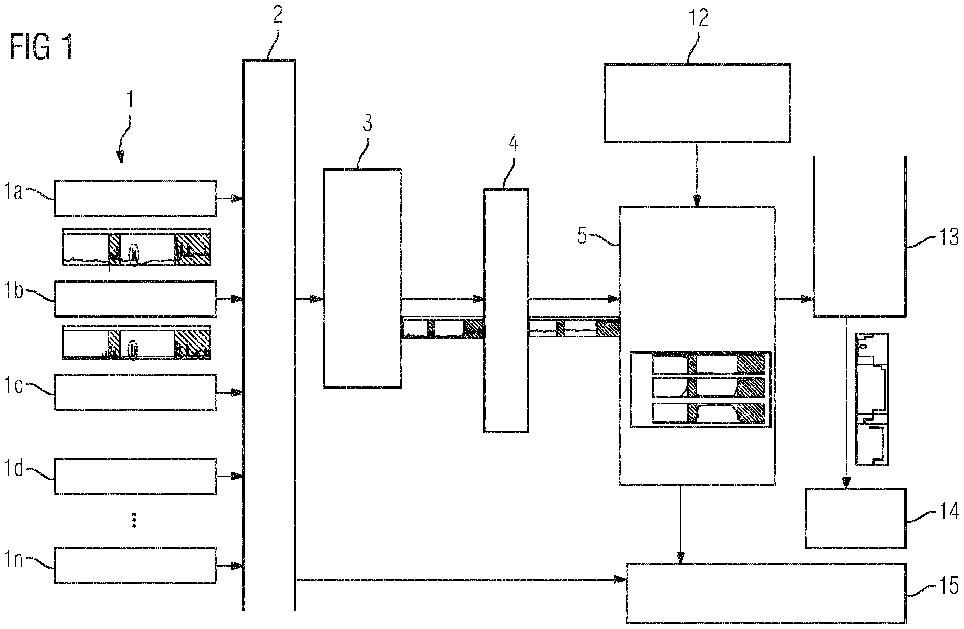

The various principal and optional components of the building automation system as per this disclosure are shown on FIG 1. The system relies on at least one or on a plurality of meter or sensor data time histories 1. FIG 1 shows data time histories 1a, 1b, 1c, 1d, ... In. Each data time history 1a, 1b, 1c, 1d, ... 1n preferably covers a time span of one day.

The building automation system then combines the data time histories 1a, 1b, 1c, 1d, ... 1n into a matrix 2 of data time histories. The matrix 2 covers a time span of the past P days, with P being a natural number.

In a subsequent step, possible correlations 3 of different sensor data are examined. The search for correlations 3 primarily aims at filtering out automated processes. Automated processes often affect several data time histories 1a, 1b, 1c, 1d, ... 1n. They may even affect each time history at the same point time and for the same time span.

A number of additional mechanisms are employed to detect and to filter out automated processes. These mechanisms may either be based on points in time or on typical profiles.

A change of a sensor reading may always or frequently occur at exactly the same point in time. That is, a change of a sensor may occur hourly, daily, or every working day, or only on weekends, or always on the same day during a week. By way of example, a program may water plants on a daily basis every evening at 8 p.m. (20:00). By way of another example, a telephone may switch to sleep mode at 11 pm (23:00) and thus log off at the WiFi router. This particular pattern indicates that it is more likely that someone is still around and has not left the building yet.

A change of a sensor reading may entail a typical profile. The sensor readings then show a specific known or learned pattern that relates to an automated process or to a specific behavioral pattern. By way of example, the power consumption of a dryer may be detected as a specific pattern by an electricity meter. By way of another example, power and water consumption patterns of a washing machine can be detected simultaneously through an electricity and through a water meter. By way of yet another example, a bedtime ritual may involve a typical profile in the form of water consumption for brushing teeth, for using the toilet, and in the form of electricity consumption when the lights in the house are switched off.

More sophisticated approaches to the detection of automated processes can be based on statistical methods such as principal component analysis (PCA) or wavelet analysis. These two methods are known for the detection of anomalies such as anomalous network traffic. PCA starts from the assumption that data from different sensors are correlated. In other words, an individual's behavior inside a building is diverse and causes changed readings in a plurality of sensors over a specific time period. By way of example, someone at home switches on and off various appliances. Consequently, electricity and water consumption will change when that person washes hands or does cooking. Likewise internet data traffic as registered by a router will change due to internet based television, internet radio, websurfing, email, etc. Automated processes may as well change some sensor readings while leaving other readings unaffected. PCA is a transformation that maps a set of data points on a new axis, i. e. on principal components. A threshold can then be set to differentiate between normal human behavior and automated processes.

After the removal of automated processes 3, the data time histories 1a, 1b, 1c, 1d, ... 1n of the matrix 2 are averaged 4 over P days, with P being a natural number. In a preferred embodiment, averaging takes place over a number of similar days such as Tuesdays. The occupancy pattern to be determined from the averaged data then becomes a little more distinct and recognizable.

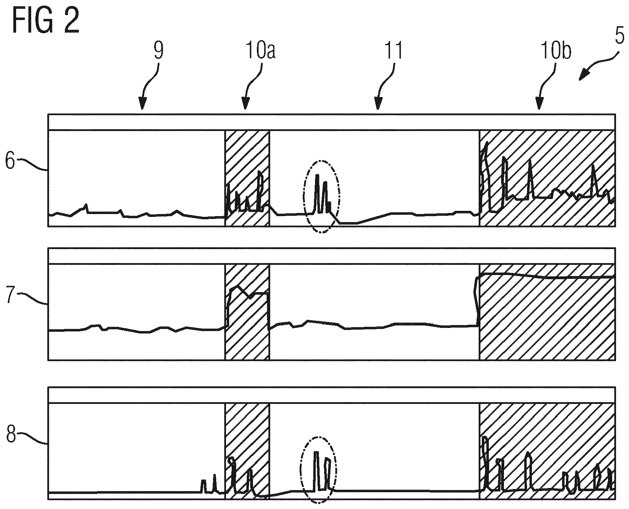

Subsequently, occupancy patterns 5 are gathered for every day of the week. FIG 2 gives an example of an occupancy pattern 5. Occupancy patterns 5 are plots of at least one sensor reading 6, 7, 8 over time for a given day of the week. By way of example, averaged readings from an electricity meter 6, 7 for every Wednesday form an occupancy pattern. Occupancy patterns may also involve readings from more than one sensor or meter and/or combined readings from more than one sensors or meter. Based on these plots, it is frequently possible to differentiate between periods when someone is home and sleeping 9, when an individual is home and active 10, or when that person is absent 11.

By way of example, the upper curve 6 of FIG 2 shows the readings of an electricity meter of a typical Thursday. That particular day is subdivided into periods of sleep 9, of absence 11, and of times when an occupant is awake and at home 10.

At the simplest level, differentiation between home and sleeping 9, home and active 10, and absence 11, is used as a basis for setting temperatures inside building. The temperatures may, for instance, be set to 19 degrees Celsius during period 9, to 22 degrees Celsius during period 10, and to 17 degrees Celsius during absence (period 11).

On a more sophisticated level, mathematical methods such as fuzzy logics and neural networks are employed to derive a profile of probabilities for a given occupancy state. In the example given above, a profile of probabilities involves the probabilities of an occupancy state at any point in time of each of the states (periods) 9, 10, 11. A temperature inside a building may then be set in accordance with the expected current state and its probability of occurrence at any point in time. By way of example, the temperature inside a building would start increasing before the occupants arrive home in the evening. The temperature would start increasing since there is, at any given time, a certain probability for the occupants to be home earlier than predicted by the average time for arriving home.

Sensor fusion is another approach known for its capacity to combine signals from different sensors into one signal. The new signal should then be better than each individual signal. The term better means more accurate, or more complete, or fewer missing data points, or any combination thereof. By way of example, a combination of signals from an electricity meter and from a water meter could lead to a new signal that is less noisy. The new signal could also cover those points in time when precise measurements from a water meter are missing.

Now turning to FIG 1, the occupancy patterns 5 may also be enhanced by typical behavior patterns 12. Electricity 6, 7 and water meter 8 readings are minimal data that frequently show similar patterns of consumption. It can thus be difficult to judge on whether an occupant is at home sleeping 9, at home and active 10, or absent 11 based only on electricity 6, 7 and on water meter 8 readings. And yet the home and sleeping period 9 will be at night in most households. Likewise, the absence period 11 will occur during the day. Personnel working night shifts would be an exception to this rule. Typical behavior provides an adequate basis for a starting assumption for most residential buildings. In addition, the period of sleeping at home 9 will typically be shorter (5 to 8 hours) than the period of absence 11 (8 to 12 hours). Data from typical behavioral patterns may therefore be used to judge whether a given period of inactivity is more likely to be a sleep period 9 or more likely due to be an absence 11.

Also, patterns for getting up 10a and for arriving home 10b typically show differences. The first period of activity at home 10a typically lasts for up to two hours, whereas the period after arriving home 10b typically last longer (2 to 8 hours). Water usage also shows distinct characteristics in any of those periods 10a, 10b. People have a tendency to wash, shower, shave, flush toilets more often in the morning than at other times of the day.

Temperature and humidity transients form yet another useful indication to distinguish periods of active presence 10a, 10b from other periods 9, 11. A rapid increase in temperature (or in humidity) may, for instance, indicate showering or bathing. Likewise, a rapid decrease in temperature may point to the opening of windows or doors. A rapid increase in both temperature and in humidity is yet another indicator of active presence, as it may indicate that someone is cooking.

In a special embodiment, the building automation system also relies on algorithmic enhancements 13. The temperature inside a building may be intelligently adapted to higher granularity than just three states such as home and sleeping 9, active presence 10, and absence 11. With added granularity, the temperature could be slightly higher when occupants first wake as they are typically not yet dressed and prefer their home to be warm. Later, whist having breakfast and rushing around before leaving for work, the temperature inside the building would be lowered by 1 degree Celsius. Similarly, when first arriving home from the cold outdoors the comfort temperature may be moderate. Later, when everyone is watching TV or reading, temperature will be raised.

Should the above pattern not be the optimum in terms of comfort, then occupants have an opportunity to request an increase or a decrease in temperature. The control system may actually learn from these inputs.

The building automation system may not only be used to control heating. The disclosed system can also be used to control air conditioning and ventilation. In other words, the building automation system can be used to control the entire heating, ventilation, and air condition scheme 14 of a building. The system may also be used for other purposes such as assisted living 15.

Any steps of a method according to the present application may be embodied in hardware, in a software module executed by a processor, or in a cloud computer, or in a combination of these. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

### Reference numerals

- 1: plurality of meter or sensor data time histories
- 1a, 1b, 1c, 1d, ... 1n: individual time histories
- 2: matrix of time histories
- 3: filter out automated processes
- 4: averaging
- 5: occupancy pattern
- 6, 7: electricity meter readings
- 8: water meter reading
- 9: home and sleeping period
- 10a, 10b: period of active presence
- 11: period of absence
- 12: typical behavior patterns
- 13: algorithmic enhancements
- 14: heating, ventilation, air conditioning
- 15: assisted living

## Claims

1. A method for automating a building, the method comprising the steps of acquiring (1) at least one data time history (1a, 1b, 1c, 1d, ... 1n) from at least one input device, the method being **characterized in**:
averaging (4) the at least one data time history,
arranging the at least one averaged (4) data time history (1a, 1b, 1c, 1d, ... 1n) into at least one occupancy pattern (5),
wherein the at least one occupancy pattern (5) covers a given time span,
determining at least one set point from said at least one occupancy pattern (5) of a building or of a part thereof, feeding the at least one set point into a system (14) for heating, ventilation, air-conditioning,
the at least one data time history (1a, 1b, 1c, 1d, ... 1n) is acquired from at least one input device selected from an electricity meter, a water meter, a temperature sensor, a humidity sensor, a noise sensor, a light sensor, or an internet router
the method further comprises a step of filtering (3) sensor readings that relate to
automated processes out of the at least one data time history (1a, 1b, 1c, 1d, ... 1n).

2. The method for automating a building according to claim 1, wherein a plurality of data time histories (1a, 1b, 1c, 1d, ... 1n) is acquired.

3. The method for automating a building according to claim 1, wherein the method employs principal component analysis, and/or wavelet analysis, and/or sensor fusion to filter (3) sensor readings that relate to automated processes out of the at least one data time history (1a, 1b, 1c, 1d, ... 1n).

4. The method for automating a building according to any of the claims 1 to 3, wherein the method further comprises a step of obtaining a finer level of granularity of the at least one set point through algorithmic enhancements (13).

5. The method for automating a building according to claim 4, wherein the algorithmic enhancement (13) raises or lowers the at least one set point.

6. The method for automating a building according to any of the claims 1 to 5, wherein a plurality of set points is determined from said occupancy pattern (5).

7. The method for automating a building according to any of the claims 1 to 6, wherein the at least one set point is a temperature value, or a humidity value, or a luminosity value, or a fan speed of a ventilation system, or a concentration of carbon dioxide.

8. The method for automating a building according to any of the claims 1 to 7, wherein the method further comprises the step of feeding the at least one set point into a system (15) for assisted living, or for home safety, or for any building automation system.

9. A non-transitory, tangible computer readable medium having instructions executable by a processor for performing the method of one of any of the claims 1 to 8 when said instructions are executed by the processor.

10. A building automation system comprising a means to acquire at least one data time history (1a, 1b, 1c, 1d, ... 1n) from at least one input device, the system being **characterized in**:
a means to average (4) the at least one data time history,
a means to arrange the at least one averaged (4) data time history (1a, 1b, 1c, 1d, ... 1n) into at least one occupancy pattern (5) of a building or of part thereof,
wherein the at least one occupancy pattern (5) covers a given time span,
a means to determine at least one set point from said occupancy pattern (5),
a means to feed the at least one set point into a system (14) for heating, ventilation, air-conditioning,
the means to acquire the at least one data time history (1a, 1b, 1c, 1d, ... 1n) is configured to acquire from at least one input device selected from an electricity meter,
a water meter, a temperature sensor, a humidity sensor, a noise sensor, a light sensor, or an internet router,
the building automation system further comprising a means for filtering (3) sensor readings that relate to automated processes out of the at least one data time history (1a, 1b, 1c, 1d, ... 1n).

## Patentansprüche

1. Verfahren zur Automatisierung eines Gebäudes, wobei das Verfahren die folgenden Schritte umfasst:
Erfassen (1) von wenigstens einem Daten-Zeit-Verlauf (1a, 1b, 1c, 1d, ... 1n) von wenigstens einer Eingabeeinrichtung, wobei das Verfahren **gekennzeichnet ist durch**:
Mitteln (4) des wenigstens einen Daten-Zeit-Verlaufs,
Anordnen des wenigstens einen gemittelten (4) Daten-Zeit-Verlaufs (1a, 1b, 1c, 1d, ... 1n) in wenigstens ein Belegungsmuster (5),
wobei das wenigstens eine Belegungsmuster (5) eine gegebene Zeitspanne abdeckt,
Bestimmen wenigstens eines Sollwerts aus dem wenigstens einen Belegungsmuster (5) eines Gebäudes oder eines Teils davon,
Eingeben des wenigstens einen Sollwerts in ein System (14) zur Heizung, Belüftung, Klimatisierung,
wobei der wenigstens eine Daten-Zeit-Verlauf (1a, 1b, 1c, 1d, ... 1n) von wenigstens einer Eingabeeinrichtung erfasst wird, die ausgewählt wird aus einem Stromzähler, einem Wasserzähler, einem Temperatursensor, einem Feuchtesensor,
einem Geräuschsensor, einem Lichtsensor oder einem Internet-Router,
wobei das Verfahren ferner einen Schritt des Filterns (3) von Sensorablesungen, die automatisierte Prozesse aus dem wenigstens einen Daten-Zeit-Verlauf (1a, 1b, 1c, 1d, ... 1n) betreffen, umfasst.

2. Das Verfahren zur Automatisierung eines Gebäudes nach Anspruch 1, wobei eine Mehrzahl von Datum-Zeit-Verläufen (1a, 1b, 1c, 1d, ... 1n) erfasst wird.

3. Das Verfahren zur Automatisierung eines Gebäudes nach Anspruch 1, wobei das Verfahren Hauptkomponentenanalyse und/oder Wavelet-Analyse und/oder Sensorfusion verwendet, um Sensorablesungen zu filtern (3), die automatisierte Prozesse aus dem wenigstens einen Daten-Zeit-Verlauf (1a, 1b, 1c, 1d, ... 1n) betreffen.

4. Das Verfahren zur Automatisierung eines Gebäudes nach einem der Ansprüche 1 bis 3, wobei das Verfahren ferner einen Schritt des Erhaltens einer feineren Granularität des wenigstens einen Sollwerts durch algorithmische Verbesserungen (13) umfasst.

5. Das Verfahren zur Automatisierung eines Gebäudes nach Anspruch 4, wobei die algorithmische Verbesserung (13) den wenigstens einen Sollwert anhebt oder senkt.

6. Das Verfahren zur Automatisierung eines Gebäudes nach einem der Ansprüche 1 bis 5, wobei eine Mehrzahl von Sollwerten aus dem Belegungsmuster (5) bestimmt wird.

7. Das Verfahren zur Automatisierung eines Gebäudes nach einem der Ansprüche 1 bis 6, wobei der wenigstens eine Sollwert ein Temperaturwert oder ein Feuchtewert oder ein Helligkeitswert oder eine Lüftergeschwindigkeit eines Belüftungssystems oder eine Konzentration von Kohlendioxid ist.

8. Das Verfahren zur Automatisierung eines Gebäudes nach einem der Ansprüche 1 bis 7, wobei das Verfahren ferner den Schritt des Eingebens des wenigstens einen Sollwerts in ein System (15) für betreutes Wohnen oder für häusliche Sicherheit oder für irgendein Gebäudeautomatisierungs-System umfasst.

9. Das Nichttransitorisches, greifbares, computerlesbares Medium mit von einem Prozessor ausführbaren Anweisungen zur Durchführung des Verfahrens nach einem der Ansprüche 1 bis 8, wenn die Anweisungen von dem Prozessor ausgeführt werden.

10. Gebäudeautomatisierungs-System mit einer Einrichtung zum Erfassen von wenigstens einem Daten-Zeit-Verlauf (1a, 1b, 1c, 1d, ... 1n) von wenigstens einer Eingabeeinrichtung, wobei das System **gekennzeichnet ist durch**:
eine Einrichtung zum Mitteln (4) des wenigstens einen Daten-Zeit-Verlaufs,
eine Einrichtung zum Anordnen des wenigstens einen gemittelten (4) Daten-Zeit-Verlaufs (1a, 1b, 1c, 1d, ... 1n) in wenigstens ein Belegungsmuster (5) eines Gebäudes oder eines Teils davon,
wobei das wenigstens eine Belegungsmuster (5) eine gegebene Zeitspanne abdeckt,
eine Einrichtung zum Bestimmen wenigstens eines Sollwerts aus dem wenigstens einen Belegungsmuster (5),
eine Einrichtung zum Eingeben des wenigstens einen Sollwerts in ein System (14) zur Heizung, Belüftung, Klimatisierung,
wobei die Einrichtung zum Erfassen des wenigstens einen Daten-Zeit-Verlaufs (1a, 1b, 1c, 1d, ... 1n) konfiguriert ist zum Erfassen von wenigstens einer Eingabeeinrichtung,
die ausgewählt wird aus einem Stromzähler, einem Wasserzähler, einem Temperatursensor, einem Feuchtesensor,
einem Geräuschsensor, einem Lichtsensor oder einem Internet-Router,
wobei das Gebäudeautomatisierungs-System ferner eine Einrichtung zum Filtern (3) von Sensorablesungen, die automatisierte Prozesse aus dem wenigstens einen Daten-Zeit-Verlauf (1a, 1b, 1c, 1d, ... 1n) betreffen, umfasst.

## Revendications

1. Procédé d'automatisation d'un bâtiment, le procédé comprenant les étapes
acquérir (1) au moins un historique temporel de données (1a, 1b, 1c, 1d, ... 1n) à partir d'au moins un dispositif d'entrée, le procédé étant **caractérisé par** :
calculer la moyenne (4) de l'au moins un historique temporel de données,
agencer l'au moins un historique temporel de données (1a, 1b, 1c, 1d, ... 1n) moyenné (4) dans au moins un modèle d'occupation (5),
dans lequel l'au moins un modèle d'occupation (5) couvre un laps de temps donné,
déterminer au moins un point de consigne à partir dudit au moins un modèle d'occupation (5) d'un bâtiment ou d'une partie de celui-ci,
introduire l'au moins un point de consigne dans un système (14) pour le chauffage, la ventilation, la climatisation,
l'au moins un historique temporel de données (1a, 1b, 1c, 1d, ... 1n) est acquis à partir d'au moins un dispositif d'entrée choisi parmi un compteur d'électricité, un compteur d'eau, un capteur de température, un capteur d'humidité, un capteur de bruit, un capteur de lumière ou un routeur internet,
le procédé comprend en outre une étape de filtrage (3) de lectures de capteur qui se rapportent à des processus automatisés à partir de l'au moins un historique temporel de données (1a, 1b, 1c, 1d, ... 1n).

2. Le procédé d'automatisation d'un bâtiment selon la revendication 1, dans lequel une pluralité d'historiques temporels de données (1a, 1b, 1c, 1d, ... 1n) est acquise.

3. Le procédé d'automatisation d'un bâtiment selon la revendication 1, dans lequel le procédé utilise une analyse de composants principaux et/ou une analyse d'ondelettes et/ou une fusion de capteurs pour filtrer (3) des lectures de capteur qui se rapportent à des processus automatisés à partir de l'au moins un historique temporel de données (1a, 1b, 1c, 1d, ... 1n).

4. Le procédé d'automatisation d'un bâtiment selon l'une des revendications 1 à 3, dans lequel le procédé comprend en outre une étape d'obtention d'un niveau de granularité plus fin de l'au moins un point de consigne par des améliorations algorithmiques (13).

5. Le procédé d'automatisation d'un bâtiment selon la revendication 4, dans lequel l'amélioration algorithmique (13) élève ou abaisse l'au moins un point de consigne.

6. Le procédé d'automatisation d'un bâtiment selon l'une des revendications 1 à 5, dans lequel une pluralité de points de consigne est déterminée à partir dudit modèle d'occupation (5).

7. Le procédé d'automatisation d'un bâtiment selon l'une des revendications 1 à 6, dans lequel l'au moins un point de consigne est une valeur de température ou une valeur d'humidité ou une valeur de luminosité ou une vitesse de ventilateur d'un système de ventilation ou une concentration de dioxyde de carbone.

8. Le procédé d'automatisation d'un bâtiment selon l'une des revendications 1 à 7, dans lequel le procédé comprend en outre l'étape d'introduction de l'au moins un point de consigne dans un système (15) pour une assistance à l'autonomie ou pour une sécurité domestique ou pour n'importe quel système d'automatisation de bâtiment.

9. Support lisible par ordinateur non transitoire tangible ayant des instructions exécutables par un processeur pour mettre en œuvre le procédé de l'une quelconque des revendications 1 à 8 lorsque lesdites instructions sont exécutées par le processeur.

10. Système d'automatisation de bâtiment comprenant
un moyen pour acquérir au moins un historique temporel de données (1a, 1b, 1c, 1d, ... 1n) à partir d'au moins un dispositif d'entrée, le système étant **caractérisé par** :
un moyen pour calculer la moyenne (4) de l'au moins un historique temporel de données,
un moyen pour agencer l'au moins un historique temporel de données (1a, 1b, 1c, 1d, ... 1n) moyenné (4) dans au moins un modèle d'occupation (5) d'un bâtiment ou d'une partie de celui-ci,
dans lequel l'au moins un modèle d'occupation (5) couvre un laps de temps donné,
un moyen pour déterminer au moins un point de consigne à partir dudit modèle d'occupation (5),
un moyen pour introduire l'au moins un point de consigne dans un système (14) pour le chauffage, la ventilation, la climatisation,
le moyen pour acquérir l'au moins un historique temporel de données (1a, 1b, 1c, 1d, ... 1n) est configuré pour acquérir à partir d'au moins un dispositif d'entrée choisi parmi un compteur d'électricité, un compteur d'eau, un capteur de température, un capteur d'humidité, un capteur de bruit, un capteur de lumière ou un routeur internet,
le système d'automatisation de bâtiment comprenant en outre un moyen pour filtrer (3) des lectures de capteur qui se rapportent à des processus automatisés à partir de l'au moins un historique temporel de données (1a, 1b, 1c, 1d, ... 1n).
